Europäisches Patentamt

(19) European Patent Office

Office européen des brevets

(11) Veröffentlichungsnummer: **0 301 262**
**A1**

## (12) EUROPÄISCHE PATENTANMELDUNG

(21) Anmeldenummer: 88110432.7

(22) Anmeldetag: 30.06.88

(51) Int. Cl.⁴: **A62D 3/00 , C01B 17/90 ,
B09B 3/00**

(30) Priorität: **25.07.87 DE 3724676**

(43) Veröffentlichungstag der Anmeldung:
**01.02.89 Patentblatt 89/05**

(84) Benannte Vertragsstaaten:
**BE DE ES FR GB IT**

(71) Anmelder: **KRONOS TITAN-Gesellschaft mbH
Peschstrasse 5 Postfach 10 07 20
D-5090 Leverkusen 1(DE)**

(72) Erfinder: **Cole, Donald
Albrecht-Dürer-Strasse 64
D-5024 Pulheim(DE)**
Erfinder: **Hartmann, Achim, Dipl.-Ing.
Lucas-Cranach-Strasse 18
D-5024 Pulheim(DE)**

(54) **Verfahren zur Aufarbeitung von eisen(II)-sulfathaltigen Metallsulfatgemischen.**

(57) Die bei der Aufkonzentrierung von metallsulfathaltigen verdünnten Schwefelsäurelösungen bis zu einer $H_2SO_4$-Konzentration von 50 bis 75 Gewichtsprozent anfallenden Metallsulfatgemische werden in der Regel thermisch gespalten. Bei Betriebsstörungen muß die Spaltung des Metallsulfatgemisches unterbrochen und das Metallsulfatgemisch auf eine Deponie gebracht werden. Hierzu müssen lösliche Bestandteile unlöslich gemacht werden. Es ist bekannt, das Metallsulfatgemisch mit trockenem Calciumhydroxid zu vermischen und durch Zusprühen von Wasser die Umsetzung einzuleiten. Die lange Umsetzungsdauer erschwert eine kontinuierliche Durchführung. Die Umsetzungsdauer soll herabgesetzt und ein pelletiertes Produkt hergestellt werden.

Das Metallsulfatgemisch soll mindestens 10 Gewichtsprozent $H_2SO_4$ enthalten und wird trocken mit feinteiligem Calciumoxid in geringem Überschuß vermischt und bei mindestens 110 °C umgesetzt. Das erhaltene Pulver wird unter Zusatz von Wasser pelletiert.

Herstellung eines lagerstabilen Schüttgutes in Form von Pellets, das nur sehr wenig lösliche Bestandteile enthält.

EP 0 301 262 A1

EP 0 301 262 A1

## Verfahren zur Aufarbeitung von eisen(II)-sulfathaltigen Metallsulfatgemischen

Die Erfindung betrifft ein Verfahren zur Aufarbeitung von eisen(II)-sulfathaltigen Metallsulfatgemischen, die beim Eindampfen von metallsulfathaltigen verdünnten Schwefelsäurelösungen bis zu einer $H_2SO_4$-Konzentration von 50 bis 75 Gewichtsprozent in der flüssigen Phase der entstehenden Metallsulfatsuspension gebildet werden, wobei das aus dieser Suspension abgetrennte Metallsulfatgemisch mit Calciumoxid und unter Mitverwendung von Wasser umgesetzt wird, wobei schwerlösliche Feststoffe gebildet werden.

Bei vielen Prozessen, insbesondere bei der Herstellung von Titandioxid durch Hydrolyse von titanylsulfathaltigen Aufschlußlösungen im sogenannten "Sulfatprozeß", fallen verdünnte Schwefelsäurelösungen an, die Metallsulfate enthalten. Ein wesentlicher Bestandteil dieser Metallsulfate ist Eisen(II)-sulfat. Es besteht nun das Problem, diese verdünnten Schwefelsäurelösungen wieder nutzbringend zu verwerten. Insbesondere besteht das Bestreben, den Schwefelsäureanteil dieser Schwefelsäurelösungen bei der Titandioxidherstellung wieder einzusetzen. Hierzu müssen die Schwefelsäurelösungen zumindest teilweise durch Eindampfen oder andere Maßnahmen aufkonzentriert werden. Im allgemeinen wird dabei die Aufkonzentrierung der Schwefelsäurelösungen so weit geführt, daß eine $H_2SO_4$ Konzentration von 50 bis 75 Gewichtsprozent erreicht wird. Bei der Aufkonzentrierung fallen die Metallsulfate in Form eines Metallsulfatgemisches aus. Dieses Metallsulfatgemisch wird nach Erreichen der gewünschten Endkonzentration abgetrennt, und die weitgehend von den Metallsulfaten befreite aufkonzentrierte Schwefelsäurelösung wird entweder einer Hochkonzentrierungsstufe zugeführt oder in den Titandioxid-Herstellungsprozeß direkt zurückgeführt. Entsprechende Verfahren sind unter anderem in der DE-A1-26 18 121, in der DE-C2-26 18 122 und in der DE-C2-27 29 755 beschrieben. Gegebenenfalls kann die Aufkonzentrierung in mehreren Stufen durchgeführt werden, wobei nach einer Vorkonzentrierungsstufe gegebenenfalls ausgefallenes Eisen(II)-sulfat-Heptahydrat aus der Lösung abgetrennt werden kann.

Das Metallsulfatgemisch fällt in Form eines schwach feuchten Pulvers an und besteht im wesentlichen aus den Sulfaten von Eisen, Magnesium und Titan, wobei das Eisensulfat überwiegend als Eisen(II)-sulfat-Monohydrat vorliegt. Außerdem enthält das Metallsulfatgemisch noch anhaftende Schwefelsäure (weiterhin als "Haftsäure" bezeichnet) und geringe Mengen weiterer Metallsulfate, z. B. die Sulfate von Mangan, Aluminium, Chrom und Vanadium.

Das Metallsulfatgemisch wird in der Regel gemeinsam mit Eisensulfiden und/oder Schwefel und/oder unter Zusatz anderer Energieträger thermisch gespalten und das entstandene Schwefeldioxid zu Schwefelsäure verarbeitet.

Diese Spaltung des Metallsulfatgemisches muß bei Unterbrechungen des Betriebes unterbrochen werden. In derzeit der Unterbrechung muß das Metallsulfatgemisch auf eine Deponie gebracht werden. Eine direkte Ablagerung des Metallsulfatgemisches ist wegen seines hohen $H_2SO_4$-Gehaltes und wegen der Wasserlöslichkeit der Sulfate nicht möglich. Es besteht somit die Notwendigkeit, das Metallsulfatgemisch in eine für die Deponie geeignete Form umzuwandeln. An das zu deponierende Material werden folgende Bedingungen gestellt, die zu erfüllen sind:

Gute Handhabbarkeit verbunden mit entsprechenden bodenmechanischen Eigenschaften; Unlöslichkeit der Metallverbindungen, insbesondere der Verbindungen von Chrom und Vanadium.

Es ist aus der EP-A2-0 132 820 bekannt, das Metallsulfatgemisch dadurch deponiefähig zu machen, daß die Metallsulfate neutralisiert und unter Bildung von schwerlöslichen Metallverbindungen umgesetzt werden. Für die Umsetzung werden dabei Calciumoxid, Calciumhydroxid und/oder Calciumcarbonat verwendet. Außerdem muß bei dieser Umsetzung Wasser eingesetzt werden.

Es wird dabei vorzugsweise angestrebt, die eingesetzten Mengen an der Calciumverbindung und an Wasser möglichst gering zu halten und so zu arbeiten, daß zum Schluß nicht eine Suspension entsteht, aus der das bei der Umsetzung erhaltene Produkt in einem gesonderten Filtrationsschritt abgetrennt werden muß, sondern direkt ein festes rieselfähiges gut handhabbares Produkt, das der Deponie zugeführt werden kann.

Gemäß einer speziellen Ausführungsform des bekannten Verfahrens wird das Metallsulfatgemisch zunächst mit trockenem gelöschtem Kalk (Ca(OH)$_2$) vermischt und dann zu der krümeligen Mischung Wasser zugesprüht. Es findet eine Umsetzung unter Verdampfen von Wasser statt, und es wird ein rieselfähiger nicht staubender Feststoff erhalten. Bei dieser bekannten Verfahrensweise setzt die Umsetzung zwischen den Metallsulfaten und dem gelöschten Kalk erst ein, wenn zu dem vorher hergestellten Gemisch beider Substanzen Wasser zugefugt wird. Ferner ist bis zur vollständigen Umsetzung eine relativ lange Verfahrensdauer von 10 Minuten erforderlich. Diese lange Verfahrensdauer erschwert eine kontinuierliche Durchführung der Umsetzung.

Wenn man ein Produkt erhalten will, das besser transportiert und gelagert werden kann, dann muß das

2

aus dem Metallsulfatgemisch und der Calciumverbindung erhaltene Umsetzungsprodukt in Form von Pellets vorliegen. Eine nachträgliche Pelletierung des nach dem bekannten Verfahren hergestellten Produktes erfordert zusätzliche Mengen an Wasser, und das ganze Verfahren einschließlich der an die Herstellung anschließenden Pelletierungsstufe ist zeitaufwendig.

Es wurde nun ein neues Verfahren gefunden, bei dem man in erheblich kürzerer Zeit eine ausgezeichnete Umsetzung erzielt, wobei man außerdem ohne einen größeren Aufwand an Wasser stabile Pellets bekommt.

Das neue Verfahren zur Aufarbeitung von eisen(II)-sulfathaltigen Metallsulfatgemischen, die beim Eindampfen von metallsulfathaltigen verdünnten Schwefelsäurelösungen bis zu einer $H_2SO_4$-Konzentration von 50 bis 75 Gewichtsprozent in der flüssigen Phase der entstehenden Metallsulfatsuspension gebildet werden, wobei das aus dieser Suspension abgetrennte Metallsulfatgemisch mit Calciumoxid und unter Mitverwendung von Wasser umgesetzt wird, wobei schwerlösliche Feststoffe gebildet werden, ist dadurch gekennzeichnet, daß

a) von einem Metallsulfatgemisch ausgegangen wird, das einen Gehalt an anhaftender freier Schwefelsäure von mindestens 10 Gewichtsprozent, berechnet als $H_2SO_4$, aufweist,

b) das Calciumoxid in feinteiliger Form mit einer solchen Korngröße eingesetzt wird, daß mindestens 50 % einen Teilchendurchmesser von weniger als 63 $\mu$m aufweisen,

c) das Metallsulfatgemisch und das Calciumoxid in einem solchen Mengenverhältnis ohne Wasserzugabe miteinander trocken vermischt werden, daß das Calciumoxid in einer Menge von 110 bis 130 % derjenigen Menge eingesetzt wird, die für die Bindung der Sulfationen aus den Metallsulfaten und der anhaftenden freien Schwefelsäure benötigt werden,

d) während des Mischens beider Substanzen ohne Wasserzugabe eine Umsetzung bei mindestens 110 °C vorgenommen wird, wobei ein homogenes trockenes Pulver erhalten wird,

e) dieses Pulver in eine Pelletiereinrichtung übergeführt wird und

f) dort unter Zusatz von 50 bis 60 Gewichtsprozent Wasser, bezogen auf die Summe des eingesetzten Metallsulfatgemisches und des eingesetzten Calciumoxids, pelletiert wird.

Die trockene Vermischung des Metallsulfatgemisches und des Calciumoxids muß mit möglichst hoher Intensität erfolgen; geeignet hierfür sind Mischer mit schnell umlaufenden Mischwerkzeugen, beispielsweise Paddelmischer.

Bei der intensiven Vermischung des festen Metallsulfatgemisches und des Calciumoxids tritt eine Umsetzung ein, bei der die im Metallsulfatgemisch befindliche Haftsäure neutralisiert wird. Diese Umsetzung ist exotherm und bewirkt einen Temperaturanstieg der Reaktionsmasse bis 140 bis 150 °C. Es tritt dabei eine intensive Verdampfung des in der Reaktionsmasse vorhandenen bzw. gebildeten Wassers ein, welche eine intensive Vermischung in der Reaktionsmasse bewirkt. Es wird bereits nach wenigen Sekunden ein trockenes feinteiliges ausgezeichnet rieselfähiges und homogenes Pulver gebildet, das neben Calciumsulfat-Hemihydrat noch Metallsulfate und Calciumoxid enthält. Der Gehalt an diesen noch nicht umgesetzten Substanzen ist für die Prozeßführung bei der anschließenden Granulierung von wesentlicher Bedeutung. Das Pulver, das sehr feinkörnig ist und in Staubform vorliegt, wird einer Pelletieranlage zugeführt, in der durch Zusatz von Wasser Pellets gebildet werden. Während der Pelletierung werden die Metallsulfate mit dem noch vorhandenen Calciumoxid umgesetzt, so daß aus den Metallsulfaten wasserunlösliche Verbindungen gebildet werden. Dieser Vorgang läuft in wenigen Minuten ab. Insbesondere enthalten die Pellets keine umweltbelastenden wasserlöslichen Stoffe. Das Granulat weist eine Korngröße von 4 bis 8 mm auf und ist gut transportfähig und lagerstabil. Die Pelletierung kann auf bekannten Vorrichtungen vorgenommen werden, die mit Abstreifern versehen sind, wie z. B. mit Abstreifern versehenen Pelletiertellern oder Pelletiertrommeln.

Das ganze Verfahren kann diskontinuierlich oder bevorzugt kontinuierlich durchgeführt werden.

Die Korngröße des eingesetzten Calciumoxids ist für die Durchführung des vorliegenden Verfahrens von Bedeutung. Mindestens 50 % des Calciumoxids sollen einen Teilchendurchmesser von weniger als 63 $\mu$m aufweisen, wenn man die Umsetzung in rationeller Weise durchführen will. Wird gröberes Calciumoxid mit einer Korngröße außerhalb des beanspruchten Bereiches eingesetzt, dann muß die einzusetzende Calciumoxidmenge erhöht werden, wenn die Umsetzung in befriedigender Weise ablaufen soll. Dieser vermehrte Calciumoxidverbrauch ist nicht nur mit erhöhten Kosten verbunden, sondern er fihrt auch zu Schwierigkeiten bei der Pelletierung, und es wird ein Endprodukt erhalten, das wegen seines erhöhten Gehaltes an Calciumoxid und seiner übermäßig alkalischen Reaktion nur beschränkt oder sogar überhaupt nicht unmittelbar deponiefähig ist.

Die Menge des eingesetzten Calciumoxids richtet sich nach der Zusammensetzung des Metallsulfatgemisches, d. h. nach seinem Anteil an Sulfationen, die einerseits von den Metallsulfaten selbst und andererseits von der Haftsäure stammen. An sich sollte schon die Calciumoxidmenge ausreichen, die stöchiometrisch erforderlich ist, um die Sulfationen aus dem Metallsulfatgemisch zu binden. Es ist aber gewöhnlich notwendig, das Calciumoxid in einem geringen Überschuß über diese stöchiometrische Menge einzusetzen, um sicherzugehen, daß alle Metallsulfate in unlösliche Verbindungen übergeführt werden. Dieser Überschuß wird im allgemeinen nicht mehr als bis zu 20 % betragen, kann aber auch noch höher sein; dabei soll er aber 30 % nicht überschreiten. Der jeweils benötigte Überschuß kann leicht anhand einiger Versuche bestimmt werden.

Die Temperatur, mit der die Reaktionsteilnehmer eingesetzt werden, wirkt sich auf die Verfahrensführung nur wenig aus und ist deshalb weithin frei wählbar. Es muß lediglich dafür gesorgt werden, daß bei der trockenen Vermischung des Metallsulfatgemisches und des Calciumoxids eine Temperatur von mindestens 110 °C eingestellt wird. Da die Umsetzung zwischen beiden Bestandteilen des Gemisches exotherm verläuft, wird diese Bedingung in der Regel schon dann erreicht, wenn beide Substanzen mit Zimmertemperatur eingesetzt werden. Vorzugsweise wird das Calciumoxid mit Zimmertemperatur und das Metallsulfatgemisch mit einer Temperatur von 50 bis 60 °C, in Einzelfällen auch bis 70 °C, eingesetzt. Das Wasser wird in der Regel mit Zimmertemperatur eingesetzt.

Durch folgendes Beispiel wird die Erfindung näher erläutert:

Das eingesetzte Metallsulfatgemisch wurde beim Aufkonzentrieren einer Hydrolysenmutterlauge aus der Titandioxidherstellung nach dem Sulfatprozeß gewonnen und hatte die in Tabelle 1 angegebene Zusammensetzung:

Tabelle 1

| Bestandteil | Gehalt (in Prozent) |
|---|---|
| $FeSO_4$ | 41,3 |
| $Fe(HSO_4)_2$ | 10,7 |
| $TiOSO_4$ | 7,1 |
| $MgSO_4$ | 13,1 |
| $Al_2(SO_4)_3$ | 0,58 |
| $MnSO_4$ | 0,96 |
| $Cr_2(SO_4)_3$ | 0,29 |
| $VOSO_4$ | 0,99 |
| $H_2SO_4$ | 12,5 |
| $H_2O$ (frei und Hydrat-Wasser) | 12,5 |

4000 g des Metallsulfatgemisches wurden 10 Sekunden lang mit 1680 g Calciumoxid in einem Paddelmischer gemischt. Nach dieser Zeit setzte eine heftige Reaktion ein, durch die das zunächst feuchte Gemisch beider Substanzen sofort in ein trockenes, ausgezeichnet rieselfähiges und homogenes staubförmiges Pulver umgewandelt wurde. Die Temperatur stieg im Gemisch bis auf 140 °C an.

Das erhaltene Pulver wurde in eine mit Abstreifern versehene Pelletiertrommel, die ein Volumen von 5 l besaß, eingefüllt und unter Zugabe von 3200 ml Wasser pelletiert.

Nach einer Behandlungszeit von 4 Minuten wurden abriebfeste und lagerstabile Pellets mit einem Durchmesser von 4 bis 8 mm erhalten, die im Inneren homogen waren.

Die Pellets wurden bei 120 °C getrocknet und dann auf lösliche Bestandteile geprüft, wobei im wesentlichen nach dem Verfahren DIN 38414-S4 vorgegangen wurde. Hierbei wurden 20 g der Pellets einer einstündigen einmaligen Eluierung mit 200 ml Wasser unterworfen. Die Analysenergebnisse des Eluats sind in Tabelle 2 aufgezeigt.

Tabelle 2

| Bestandteil in mg/l | |
|---|---|
| Ca | 840 |
| Fe | 1,0 |
| Mg | 0,4 |
| Mn | 0,1 |
| Al | <1,0 |
| Ti | <1,0 |
| Cr | <0,1 |
| V | <0,1 |
| $SO_4''$ | 1700 |
| pH-Wert | 11,4 |

Wie Tabelle 2 zeigt, besaß das erhaltene Produkt nur sehr wenig lösliche Bestandteile und konnte deshalb ohne weiteres auf die Deponie gebracht werden. Vor allem die in hohem Maße unerwünschten Bestandteile wie Chrom und Vanadium wurden praktisch quantitativ in eine unlösliche Form übergeführt.

**Ansprüche**

Verfahren zur Aufarbeitung von eisen(II)-sulfathaltigen Metallsulfatgemischen, die beim Eindampfen von metallsulfathaltigen verdünnten Schwefelsäurelösungen bis zu einer $H_2SO_4$-Konzentration von 50 bis 75 Gewichtsprozent in der flüssigen Phase der entstehenden Metallsulfatsuspension gebildet werden, wobei das aus dieser Suspension abgetrennte Metallsulfatgemisch mit Calciumoxid und unter Mitverwendung von Wasser umgesetzt wird, wobei schwerlösliche Feststoffe gebildet werden, dadurch gekennzeichnet, daß

a) von einem Metallsulfatgemisch ausgegangen wird, das einen Gehalt an anhaftender freier Schwefelsäure von mindestens 10 Gewichtsprozent, berechnet als $H_2SO_4$, aufweist,

b) das Calciumoxid in feinteiliger Form mit einer solchen Korngröße eingesetzt wird, daß mindestens 50 % einen Teilchendurchmesser von weniger als 63 μm aufweisen,

c) das Metallsulfatgemisch und das Calciumoxid in einem solchen Mengenverhältnis ohne Wasserzugabe miteinander trocken vermischt werden, daß das Calciumoxid in einer Menge von 110 bis 130 % derjenigen Menge eingesetzt wird, die für die Bindung der Sulfationen aus den Metallsulfaten und der anhaftenden freien Schwefelsäure benötigt werden,

d) während des Mischens beider Substanzen ohne Wasserzugabe eine Umsetzung bei mindestens 110 °C vorgenommen wird, wobei ein homogenes trockenes Pulver erhalten wird,

e) dieses Pulver in eine Pelletiereinrichtung übergeführt wird und

f) dort unter Zusatz von 50 bis 60 Gewichtsprozent Wasser, bezogen auf die Summe des eingesetzten Metallsulfatgemisches und des eingesetzten Calciumoxids, pelletiert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 132 820 (BAYER A.G.)<br>* Seite 4, Zeile 16 - Seite 6, Zeile 8;<br>Seite 7 Zeile 23 - Seite 8, Zeile 8;<br>Beispiel 6; Patentansprüche *<br>--- | 1 | A 62 D 3/00<br>C 01 B 17/90<br>B 09 B 3/00 |
| A | DE-A-2 652 107 (SOC. de PRAYON)<br>* Ansprüche; Seite 14, Zeile 1 - Seite 15, Zeile 21; Seite 16, Zeile 19 - Seite 18, Zeile 18; Seite 22, Zeile 21 - Seite 24, Zeile 5; Beispiel 6 *<br>--- | 1 | |
| A | EP-A-0 128 689 (DU PONT DE NEMOURS)<br>* Seite 3, Zeile 34 - Seite 7, Zeile 5; Ansprüche *<br>--- | 1 | |
| A | EP-A-0 135 147 (GEBR. KNAUF WESTDEUTSCHE GIPSWERKE)<br>* Seite 4, Zeile 14 - Seite 5, Zeile 32; Seite 8, Zeile 4 - Seite 9, Zeile 14; Ansprüche *<br>----- | 1 | |

RECHERCHIERTE SACHGEBIETE (Int. Cl.4)

A 62 D
C 01 B
B 09 B

Der vorliegende Recherchenbericht wurde für alle Patentansprüche erstellt

| Recherchenort | Abschlußdatum der Recherche | Prüfer |
|---|---|---|
| DEN HAAG | 02-11-1988 | FLETCHER A.S. |